# EUROPEAN PATENT SPECIFICATION

(11) **EP 0 584 227 B1**
(45) Date of publication and mention of the grant of the patent: **08.10.1997**
(21) Application number: 92912147.3
(22) Date of filing: 27.04.1992
(51) Int. Cl.: A01N 35/06, A01N 41/10

(54) **HERBICIDAL SUBSTITUTED CYCLOHEXANEDIONE AND NITROGEN FERTILISER COMPOSITIONS AND METHOD**
VERFAHREN UND HERBIZIDE ZUSAMMENSETZUNGEN, DIE SUBSTITUIERTE CYCLOHEXANDIONE UND STICKSTOFFDÜNGER ENTHALTEN
PROCEDE ET COMPOSITIONS HERBICIDES CONTENANT UN ENGRAIS AZOTE ET UNE CYCLOHEXANEDIONE SUBSTITUEE

(30) Priority: 01.05.1991 US 694184
(43) Date of publication of application: 02.03.1994
(73) Proprietor: ZENECA LIMITED, London W1Y 6LN (GB)
(72) Inventor: THIELE, Gerald H., Champaign, IL 61821 (US); THOMAS, David A., Monticello, IL 61856 (US)
(74) Representative: Waterman, John Richard
(86) International application number: US9203551
(87) International publication number: WO9219107

(56) References cited:
- EP-A- 0 137 963
- EP-A- 0 298 680
- EP-A- 0 350 079

## Description

### Background of the Invention

In many cases, novel mixtures of known agrochemicals have been shown to be more effective in combination than when applied individually. The present invention resides in the discovery of novel herbicidal compositions which comprise herbicidally effective amounts of substituted cyclohexanedione, nitrogen sources and adjuvants. In another embodiment, the composition also includes a substantially non-phytotoxic, antidotally effective amount of a cyclohexanedione herbicide antidote.

The invention also comprises a method of controlling undesirable vegetation in the presence of a crop, particularly a corn crop, by applying to the locus of the crop or undesired vegetation a herbicidal composition comprising herbicidally effective amounts of the cyclohexanedione, the nitrogen source, and one or more adjuvants.

### Prior Art

The compounds forming the combination which is the subject of the present invention are independently known in the art for their effects on plant growth. Cyclohexanediones are disclosed as herbicides in U.S. Patent Nos. 4,780,127 (Michaely et al., June 30, 1986); 4,946,981 (Carter et al., August 7, 1990); 4,816,066 (Michaely et al., March 28, 1989); and 4,781,751 (Chin, November 1, 1988). Nitrogen is well known in the art as a fertilizer and is described in the Farm Chemicals Handbook, 1988 Edition on pages B48 and B49. Commercially available nitrogen fertilizers include anhydrous ammonia, ammonium nitrate, ammonium sulfate, urea, nitrogen solutions (which include urea ammonium nitrate), ammonium phosphate, potassium nitrate, and combinations thereof. Other fertilizers include methyl ammonia, ammonia chloride and methyl ammonia chloride. Other compounds used in the herbicidal composition of this invention are adjuvants. The term adjuvant includes materials such as wetting agents, spreaders, emulsifiers, dispersing agents, surfactants and the like.

Additionally, synergistic compositions employing cyclohexanediones and other herbicides are disclosed in U.S. Patent No. 4,759,794 (Hsu, July 26, 1988). This patent specifically claims the cyclohexandione 2-(2-chloro-4-methanesulfonylbenzoyl)-1,3-cyclohexandione in combination with specific benzoic acid, (3-amino-2,5 dichlorobenzoic acid); acetanilide (2-chloro-N-isopropylacetanile); and triazine (2-chloro-4-(ethylamino)-6-isopropylamino)s-triazine) herbicides.

### Description of the Invention

It has been discovered that the control of undesirable vegetation is exhibited by compositions comprising a mixture of the following compounds:
a) an herbicidally effective amount of a substituted cyclohexanedione of the formula 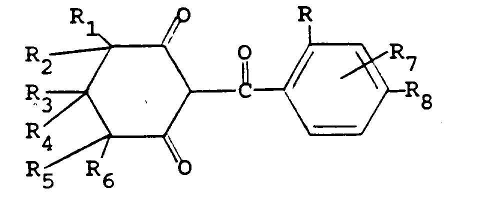 in which
   R is halogen; C₁-C₂ alkyl, preferably methyl; C₁-C₂ alkoxy, preferably methoxy; nitro; cyano; C₁-C₂ haloalkyl, preferably trifluoromethyl; or R^{a}SOₙ- wherein n is 0 or 2, preferably 2 and R^{a} is C₁-C₂ alkyl, preferably methyl. Preferably, R is chlorine, bromine, C₁-C₂ alkyl, C₁-C₂ alkoxy, cyano, nitro, C₁-C₂ alkylthio or C₁-C₂ alkylsulfonyl; more preferably chlorine, nitro, methyl, trifluoromethyl or methylsulfonyl;
   R₁, R₂, R₃, R₄, R₅ and R₆ are independently hydrogen; C₁-C₄ alkyl, preferably C₁-C₂ alkyl, more preferably methyl or hydrogen;
   R₇ and R₈ are independently (1) hydrogen; (2) halogen, preferably chlorine, fluorine or bromine; (3) C₁-C₄ alkyl, preferably methyl; (4) C₁-C₄ alkoxy, preferably methoxy or ethoxy; (5) trifluoromethoxy; (6) cyano; (7) nitro; (8) C₁-C₄ haloalkyl, more preferably trifluoromethyl; (9) R^{b}SOₙ- wherein n is the integer 0, 1 or 2, preferably 0 or 2; and R^{b} is (a) C₁-C₄ alkyl, preferably methyl; or (b) C₁-C₄ alkyl substituted with halogen, preferably chloromethyl, or trifluoromethyl; (10) -NR^{c}R^{d} wherein R^{c} and R^{d} are independently hydrogen or C₁-C₄ alkyl; (11) R^{e}C(O)- wherein R^{e} is C₁-C₄ alkyl or C₁-C₄ alkoxy; (12) -SO₂NR^{c}R^{d} wherein R^{c} and R^{d} are as defined; (13) -N(R^{c})C(O)R^{d} wherein R^{c} and R^{d} are as defined; and (14) -CH₂CH₂OCH₃ or -CH₂CH₂OC₂H₅;
b) at least one nitrogen containing fertilizer that is present in an amount that increases the herbicidal activity of said substituted cyclohexanedione; and
c) one or more adjuvants.

Preferred cyclohexanediones are those in which R is chlorine, bromine, nitro, methyl or trifluoromethyl, most preferably, R is chloro and preferably R⁷ is in the 3-position. More preferably, R⁷ is hydrogen, C₁-C₃ alkoxy, -CH₂CH₂OCH₃, -CH₂CH₂OC₂H₅, or C₁-C₄ thioalkyl. More preferably, R⁷ is hydrogen, methylthio, methoxy, ethoxy, -CH₂CH₂OCH₃ or -CH₂CH₂OC₂H₅. Most preferably, R⁸ is halogen, trifluoromethyl, or R^{b}SOₙ wherein R^{b} is C₁-C₄ alkyl, preferably methyl or ethyl, and n is the integer 0 or 2.

The most preferred cyclohexanediones are 2-(2-chloro-3-ethoxy-4-ethylsulfonyl benzoyl)-5-methyl-1,3-cyclohexanedione and 2-(2-chloro-3-ethoxyl-4-ethylsulfonyl benzoyl)-1,3-cyclohexanedione. These compounds are disclosed in U.S. Patent No. 4,780,127 and a key process for their preparation is disclosed in U.S. Patent No. 4,695,673. These references are hereby incorporated by reference.

The term "C₁-C₄ alkyl" includes methyl, ethyl, n-propyl, isopropyl, n-butyl, sec-butyl, isobutyl and t-butyl. The term "halogen" includes chlorine, bromine, iodine and fluorine. The term "C₁-C₄ alkoxy" includes methoxy, ethoxy, n-propoxy, isopropoxy, n-butoxy, sec-butoxy, isobutoxy and t-butoxy. The term "C₁-C₄ haloalkyl" includes the alkyl groups defined above under C₁-C₄ alkyl in which one or more hydrogen is replaced by chloro, bromo, iodo or fluoro.

Nitrogen sources used in fertilizing materials are commonly classified as either nitrate or ammonium types. Commercially available ammonium types include anhydrous ammonia, aquaammonia, ammonium nitrate, ammonium sulfate, fluid nitrogen fertilizers, urea, and ammonium phosphates. The nitrate type fertilizers include ammonium nitrate, nitrogen solutions, calcium nitrate and sodium nitrate. The preferred nitrogen fertilizers are nitrogen solutions. The most preferred nitrogen fertilizer is urea ammonium nitrate (UAN) wherein the % N is about between 28-33%. This solution and other nitrogen solutions within the scope of the present invention can be prepared by known procedures in the art.

The preferred adjuvants include nonionic, anionic, cationic and amphoteric surfactants. Examples of anionic surfactants include:
a) carboxylic acid salts, for example, sodium and potassium salts of coconut oil fatty acids;
b) sulfonic acid salts, for example, linear alkyl benzene sulfonates, sodium, calcium and ammonium lignosulfonates, petroleum sulfonates, paraffin sulfonates, and alkyl naphthalene sulfonates;
c) sulfuric acid ester salts, for example, sulfated linear primary alcohols; and
d) phosphonic and polyphosphonic acid esters, for example, sodium alkyl phosphate (not oxyethylenated).

Examples of cationic surfactants include:
a) long chain amines;
b) quaternary ammonium salts, for example, cetyltrimethyl ammonium bromide and N-alkyl trimethyl ammonia chloride; and
c) polyoxyethylenated long chain amines.

Examples of nonionic surfactants include:
a) polyoxyethylenated alkyl phenols;
b) polyoxyethylenated straight-chain alcohols;
c) polyoxyethylenated polyoxypropylene glycols;
d) glyceryl and polyglyceryl esters of natural fatty acids;
e) propylene glycol, sorbital polyoxyethylenated sorbital esters;
f) alkanolamines;
g) tertiary acetylenic glycols;
h) polyoxyethylenated silicones;
i) N-alkyl pyrrolidones; and
j) alkyl polyglycosides.

Examples of ampholytic surfactants include:
a) β-N-alkylaminopropionic acids;
b) N-alkyl-β-iminodipropionic acids;
c) imidazoline carboxylates;
d) N-alkylbetaines;
e) amino oxides;
f) sulfobetaines or sultaines; and
g) phosphatides.

These surfactants and others are described in Drew Myers, Surfactant Science and Technology, (New York: VCH Publishers, Inc., 1988), Chapter 2 and Milton J. Rosen, Surfactants and Interfacial Phenomena, 2nd Edition, (New York: John Wiley and Sons, Inc., 1989), Chapter 1. These references are hereby incorporated by reference.

Exemplary surfactants found to be useful in the compositions of this invention include the following: polyoxyethylene sorbitan monolaurates, manufactured by ICI Americas Inc. and sold under the tradename Tween 2O; alkylaryl-polyoxyethylenes, manufactured by Chevron Chemical Co. and sold under the tradename Ortho X-77; paraffin based petroleum oil, polyoxyethylated polyol fatty acids and polyol fatty esters, manufactured by Helena Chemical Co. and sold under the tradename Agridex; DASH, a tradename of a proprietary blend of surfactants manufactured by BASF Corporation; crop oil concentrate; and silicone based additives.

In addition to the foregoing, inert adjuvants can also be incorporated into the compositions of this invention to provide a more satisfactory formulation. Such inert adjuvants include spreaders, emulsifiers, dispersing agents, foaming adjuvants, foam suppressants, penetrants and correctives.

The term herbicide is used herein to denote a compound which controls or modifies the growth of plants. The term herbicidally effective amount is used to indicate the quantity of such compound or combination of such compound which is capable of producing a controlling or modifying effect. Controlling or modifying effects include all deviations from natural development, for example: killing, retardation, leaf burn, dwarfing and the like. The term plants is used to include all postemergent vegetation, ranging from seedlings to established vegetation.

The term nitrogen fertilizer is used herein to denote a primary nutrient that is required by all plants in considerable quantities for plant growth. Certain fertilizers have been used by applicators as carriers for pesticides. This type of application method allows the grower to apply the nitrogen and herbicide at the same time in one operation. The benefits of this system are reduced time and labor needs.

Application rates will depend upon the weeds to be controlled and the degree of control desired. In general, the compositions of this invention are most efficiently employed at a rate of 0.001 to 20 pounds per acre (0.001 to 22.4 kilograms per hectare) of the active ingredients, preferably 0.01 to 15 pounds per acre (0.01 to 16.8 kilograms per hectare).

Usually, the nitrogen source and adjuvants are added independently to the spray mixture as a percent of the total spray volume or as gallons of product per acre. A preferred application range is 0.001 to 200 gallons of product per acre, more preferably about 0.01 to 5.0 gallons of product per acre, and most preferably about 0.1 to 2 gallons of product per acre for UAN and adjuvants.

An important factor influencing the usefulness of a given herbicide is its selectivity towards crops. In some cases a beneficial crop is susceptible to the effects of the herbicide. In addition, certain herbicidal compounds are phytotoxic to some weed species but not to others. To be effective, an herbicide must cause minimal damage to the beneficial crop while maximizing damage to weed species which infest the locus of the crop.

To preserve the beneficial aspects of herbicide use and to minimize crop damage, many herbicide antidotes or safeners have been prepared. Therefore, another embodiment of this invention includes the use of antidotes in the herbicidal composition. See U.S. Patent Nos. 4,021,224 (Pallos et al., May 3, 1977) and specifically 4,938,796 (Buren et al., July 3, 1990) for antidoted composition comprising substituted acylated 1,3-dicarbonyl compounds. This reference is hereby incorporated by reference in its entirety.

Representative antidotes for use with herbicides which are contemplated as being suitable for this invention include, e.g., compounds selected from the group consisting of amides of haloalkanoic acids (U.S. Patents 4,256,481; 4,294,764; 4,021,224); aromatic oxime derivatives (U.S. Patent 4,070,389); thiazole carboxylic acids and derivatives thereof (4,199,506); aryl cyclopropane carbonitrile derivatives (U.S. Patent 4,859,232); and 1,8-naphthalic anhydride. Specific compounds include 2,2-dimethyl-N-dichloroacetylthiazolidine; N,N-diallyl dichloroacetamide (R25788); 2,2-dimethyl-3-dichloroacetyl oxazolidine; 2,2,5-trimethyl-N-dichloroacetyl oxazolidine (R29148); 2,2-spirocyclohexyl-N-dichloroacetyl oxazolidine (AD-67); 2,2-di-chloro-1-(1,2,3,4-tetrahydro-1-methyl-2-isoquinolyl) (ethanone); 2,2-dimethyl-5-n-propyl-N-dichloroacetyl oxazolidine; α-[(1,3-dioxypyran-2-yl-methoxy)-imino] benzenacetonitrile; naphthalic anhydride; 2-chloro-4-(trifluoromethyl) phenylmethyl ester (flurazole); and the like.

The amount of a given antidote to be utilized in combination with the mixture in the composition of this invention and the manner of its utilization will vary according to the particular antidote to be employed, the crop which is to be protected, the amount or rate of herbicide to be applied, and the soil and climatic conditions of the agricultural environment in which the mixture is to be applied. The selection of a specific antidote for use in the compositions, the manner in which it is to be applied (e.g., tank mix, in furrow application, seed treatment, etc.), the determination of activity which is nonphytotoxic but antidotally effective, and the amount necessary to provide this result, can be readily performed utilizing the test procedures in the cited patents such as U.S. Patent No. 4,938,796, in accordance with common practice in the art.

### Herbicidal Evaluations

Herbicidal evaluations of mixtures of substituted cyclohexanediones and UAN with various surfactants.

### EXAMPLE I

This example demonstrates the response of 2-(2-chloro-3-ethoxy-4-ethylsulfonylbenzoyl)-5-methyl-1,3-cyclohexanedione, urea ammonium nitrate (UAN) and surfactants in combined postemergence application to a variety of weeds.

| The weed species were as follows: | | |
|---|---|---|
| Abbreviation | Common Name | Scientific Name |
| SETFA | giant foxtail | Seteria faberii |
| IPOSS | morningglory | Ipomoea sp. |
| ABUTH | velvetleaf | Abutilon theophrasti |
| SETSS | foxtail sp. | Setaria sp. |
| ECHCG | barnyardgrass | Echinochloa crus-galli |
| AMARE | redroot pigweed | Amaranthus retroflexus |
| XANSS | cocklebur sp. | Xanthium sp. |

| The crop species were as follows: | | |
|---|---|---|
| CN | corn | Zea maize (L.) |

The experiment was a randomized complete block design with three replicates. Plots were 6' x 14'. Treatments were applied at the 7-8 leaf stage of corn by tank-mix. At dates approximately 18 days and 28 days after treatment, the degree of injury or control of the weeds was determined by visual comparison of untreated plants treated at the same time. The injury rating, on a scale of 0 to 100%, was recorded for each species as percent control, with 0% representing no injury and 100% representing complete kill. The results of these tests are contained in the following Tables I and II. Additionally, an untreated control in which the plot was untreated with any components of the claimed composition resulted in 0% weed control.

**TABLE I**

| Percent corn phytoxicity and weed control at 18 days after application with compositions including 2-(2-chloro-3-ethoxy-4-ethylsulfonylbenzoyl)-5-methyl-1,3-cyclohexanedione as an herbicide | | | | | | | | | | |
|---|---|---|---|---|---|---|---|---|---|---|
| Treatment | Rate¹ lb/A | %V/V | CN | IPOSS | ABUTH | SETFA | ECHCG | AMARE | XANSS | SETSS |
| ORTHO-X-77 | 0.0625 | 0.5 | 0 | 0 | 45 | 55 | 65 | 62 | 64 | 48 |
| | 0.125 | 0.5 | 0 | 0 | 55 | 68 | 94 | 64 | 47 | 67 |
| | 0.250 | 0.5 | 0 | 33 | 91 | 88 | 95 | 83 | 58 | 89 |
| AGRIDEX | 0.0625 | 1.0 | 0 | 0 | 40 | 40 | 92 | 63 | 17 | 43 |
| | 0.125 | 1.0 | 0 | 10 | 55 | 45 | 75 | 42 | 33 | 53 |
| | 0.250 | 1.0 | 0 | 27 | 84 | 73 | 98 | 68 | 67 | 78 |
| DASH | 0.0625 | 1.0 | 0 | 13 | 47 | 57 | 91 | 78 | 0 | 52 |
| | 0.125 | 1.0 | 0 | 22 | 80 | 89 | 99 | 80 | 32 | 78 |
| | 0.250 | 1.0 | 0 | 28 | 99 | 97 | 98 | 78 | 55 | 95 |
| ORTHO-X-77 +UAN | 0.0625 | 0.5+4.0 | 0 | 38 | 98 | 80 | 97 | 73 | 37 | 80 |
| | 0.125 | 0.5+4.0 | 0 | 43 | 95 | 82 | 94 | 73 | 38 | 82 |
| | 0.250 | 0.5+4.0 | 0 | 70 | 100 | 99 | 100 | 99 | 95 | 99 |
| AGRIDEX +UAN | 0.0625 | 1.0+4.0 | 0 | 47 | 99 | 97 | 99 | 98 | 33 | 92 |
| | 0.125 | 1.0+4.0 | 0 | 42 | 100 | 98 | 99 | 80 | 58 | 99 |
| | 0.250 | 1.0+4.0 | 0 | 68 | 100 | 100 | 100 | 100 | 95 | 100 |
| DASH +UAN | 0.0625 | 1.0+4.0 | 0 | 53 | 100 | 100 | 100 | 80 | 15 | 100 |
| | 0.125 | 1.0+4.0 | 0 | 68 | 99 | 100 | 100 | 100 | 97 | 100 |
| | 0.250 | 1.0+4.0 | 0 | 80 | 100 | 100 | 100 | 98 | 95 | 100 |
| CONTROL | 0.0625 | --- | 0 | 0 | 27 | 0 | 0 | 0 | 0 | 0 |
| | 0.125 | --- | 0 | 0 | 22 | 0 | 32 | 13 | 0 | 0 |
| | 0.250 | --- | 0 | 12 | 53 | 27 | 40 | 65 | 12 | 45 |

| | | | | | | | | | | |
|---|---|---|---|---|---|---|---|---|---|---|
| ¹ 2-(2-chloro-3-ethoxy-4-ethylsulfonylbenzoyl)-5-methyl-1,3-cyclohexanedione | | | | | | | | | | |

**TABLE II**

| Percent corn phytoxicity and weed control at 4 weeks after application with 2-(2-chloro-3-ethoxy-4-ethylsulfonylbenzoyl)-5-methyl-1,3-cyclohexanedione as an herbicide | | | | | | | | | | |
|---|---|---|---|---|---|---|---|---|---|---|
| Treatment | Rate¹ lb/A | %V/V | CN | IPOSS | ABUTH | SETFA | ECHCG | AMARE | XANSS | SETSS |
| ORTHO-X-77 | 0.0625 | 0.5 | 0 | 0 | 53 | 48 | 65 | 57 | 4 | 58 |
| | 0.125 | 0.5 | 0 | 15 | 57 | 63 | 88 | 53 | 15 | 63 |
| | 0.250 | 0.5 | 0 | 0 | 82 | 69 | 100 | 78 | 48 | 88 |
| AGRIDEX | 0.0625 | 1.0 | 0 | 0 | 28 | 28 | 72 | 38 | 22 | 32 |
| | 0.125 | 1.0 | 0 | 0 | 43 | 37 | 49 | 32 | 0 | 43 |
| | 0.250 | 1.0 | 0 | 15 | 60 | 58 | 95 | 68 | 58 | 76 |
| DASH | 0.0625 | 1.0 | 0 | 0 | 35 | 48 | 88 | 73 | 23 | 53 |
| | 0.125 | 1.0 | 0 | 0 | 78 | 81 | 100 | 78 | 40 | 78 |
| | 0.250 | 1.0 | 0 | 15 | 94 | 99 | 100 | 87 | 52 | 100 |
| ORTHO-X-77 +UAN | 0.0625 | 0.5+4.0 | 0 | 0 | 80 | 63 | 82 | 58 | 55 | 65 |
| | 0.125 | 0.5+4.0 | 0 | 28 | 90 | 73 | 97 | 43 | 72 | 72 |
| | 0.250 | 0.5+4.0 | 0 | 48 | 100 | 99 | 100 | 100 | 98 | 99 |
| AGRIDEX +UAN | 0.0625 | 1.0+4.0 | 0 | 13 | 99 | 90 | 91 | 90 | 0 | 89 |
| | 0.125 | 1.0+4.0 | 0 | 0 | 100 | 95 | 98 | 78 | 45 | 92 |
| | 0.250 | 1.0+4.0 | 0 | 57 | 100 | 100 | 100 | 100 | 99 | 100 |
| DASH +UAN | 0.0625 | 1.0+4.0 | 0 | 33 | 100 | 100 | 100 | 77 | 23 | 98 |
| | 0.125 | 1.0+4.0 | 0 | 55 | 100 | 100 | 100 | 100 | 67 | 100 |
| | 0.250 | 1.0+4.0 | 0 | 72 | 100 | 100 | 100 | 92 | 100 | 100 |
| CONTROL | 0.0625 | --- | 0 | 0 | 0 | 0 | 0 | 0 | 0 | 0 |
| | 0.125 | --- | 0 | 0 | 32 | 22 | 12 | 0 | 17 | 27 |
| | 0.250 | --- | 0 | 0 | 42 | 5 | 23 | 33 | 38 | 22 |

| | | | | | | | | | | |
|---|---|---|---|---|---|---|---|---|---|---|
| ¹ 2-(2-chloro-3-ethoxy-4-ethylsulfonylbenzoyl)-5-methyl-1,3-cyclohexanedione | | | | | | | | | | |

As shown by the data in Tables I and II, addition of the nonionic surfactants and UAN did not increase corn injury at the higher rates of cyclohexanedione application. The analysis reveals that the combination of cyclohexanedione, UAN and surfactant has a different degree of effectiveness on various weed species, but it is clear that the addition of UAN to the composition increases weed control across all tested weed species with the exception of ECHCG. The composition of this invention was particularly effective at lower application rates of 0.063 and 0.125 lbs/acre cyclohexanedione.

### Formulations

The compounds and compositions of this invention can be formulated in the same manner in which herbicides are generally formulated. The object of the formulation is to apply the compounds and compositions to the locus where control is desired by conventional method. The locus may include soil, seeds, seedlings, crop, crop seeds and vegetation.

Useful formulations of the compounds of this invention can be prepared in conventional ways. They include dusts, granules, microcapsules, pellets, solutions, suspensions, emulsions, wettable powders, emulsifiable concentrates and the like. Many of these may be applied directly to the locus. Sprayable formulations can be extended in suitable media and used at spray volumes of from a few liters to several hundred liters per hectare. High strength compositions are primarily used as intermediates for further formulation. The formulations, broadly, contain about 0.1% to 99% by weight of active herbicide and antidote ingredient(s) and optionally at least one of (a) about 0.1% to 20% surfactant(s) and (b) about 1% to 99.9% solid or liquid inert diluent(s). More specifically, they can contain these ingredients in the following approximate proportions.

**TABLE VII**

| | Active Herb. & Ant. Ingredients | Weight Percent * | |
|---|---|---|---|
| | | Diluent(s) | Surfactant(s) |
| Wettable Powders | 20-90 | 0-74 | 1-10 |
| Oil Suspensions | 3-50 | 40-95 | 0-15 |

| Emulsions, Solutions (Including Emulsifiable Concentrates) | | | |
|---|---|---|---|
| Aqueous Suspension | 10-50 | 40-84 | 1-20 |
| Dusts | 1-25 | 70-99 | 1-20 |
| Granules and Pellets | 0.1-95 | 5-99.9 | 0-15 |
| Compositions | 90-99 | 0-10 | 0-2 |

| | | | |
|---|---|---|---|
| * Active ingredient plus at least one of a Surfactant or a Diluent equals 100 weight percent. | | | |

Lower or higher levels of active ingredient can be present depending on the intended use and the physical properties of the compound. Higher ratios of surfactant to active ingredient are sometimes desirable, and are achieved by incorporation into the formulation or by tank mixing.

Dusts are free-flowing powder compositions containing the formulant impregnated on a particulate carrier. The particle size of the carriers is usually in the approximate range of 30 to 50 microns. Examples of suitable carriers are talc, bentonite, diatomaceous earth, and pyrophyllite. The composition generally contains up to 50% of formulant. Anti-caking and anti-static agents may also be added. Dusts may be applied by spraying from boom sprayers, hand sprayers or airplanes.

Wettable powders are finely divided compositions comprising a particular carrier impregnated with the formulant and additionally containing one or more surface active agents. The surface active agent promotes rapid dispersion of the powder in an aqueous medium to form stable, sprayable suspensions. A wide variety of surface active agents can be used, for example, long chain fatty alcohols and alkali metal salts of sulfated fatty alcohols; salts of sulfonic acid; esters of long chain fatty acids; and polyhydric alcohols, in which the alcohol groups are free, omega-substituted polyethylene glycols of relatively long chain length. A list of surface active agents suitable for use in agriculture formulations can be found in Wade Van Valkenburg, Pesticide Formulations (New York: Marcel Dekker, Inc., 1973), pages 79-84.

Granules comprise the formulant impregnated on a particulate inert carrier having a particle size of about 1 to 2 millimeters (mm) in diameter. The granules can be made by spraying a solution of the formulant in a volatile solvent onto the granular carrier. Examples of suitable carriers for the preparation of granules include clay, vermiculate sawdust, and granular carbon.

Microcapsules and other slow release formulations are advantageous as formulations to deliver and distribute the active ingredients. Microcapsules consist of fully enclosed droplets or granules containing the active materials in which the enclosing material is an inert porous membrane, arranged to allow escape of the enclosed materials to the surrounding medium at controlled rates over a specified period of time. Encapsulated droplets are typically about 1 to 50 microns in diameter. The enclosed liquid typically constitutes about 50 to 95% of the weight of the entire capsule, and may contain an amount of solvent in addition to the active materials. Encapsulated granules are characterized by porous membranes sealing the openings of the granule carrier pores, trapping the liquid containing the active components inside for controlled release. A typical granule size ranges from 1 millimeter to 1 centimeter in diameter. In agricultural usage, the granule size is generally about 1 to 2 millimeters in diameter. Granules formed by extrusion, agglomeration or prilling are useful in the present invention as well as materials in their naturally occurring form. Examples of such carriers are vermiculite, starch sintered clay granules, kaolin, attapulgite clay, sawdust and granular carbon. Useful encapsulating materials include natural and synthetic rubbers, cellulosic materials, styrene-butadiene copolymers, polyacrylonitriles, polyacrylates, polyesters, polyamides, polyureas, polyurethanes and starch xanthates.

Emulsifiable concentrates consist of an oil solution of the formulant plus and emulsifying agent. Prior to use, the concentrate is diluted with water to form a suspended emulsion of oil droplets. The emulsifiers used are usually a mixture of anionic and nonionic surfactants. Other additives, such as suspending agents and thickeners, may be included in the emulsifiable concentrate.

When the formulant is an antidote and herbicide composition, the proportion of antidote compound to herbicide compound generally ranges from approximately 0.001 to 30 parts by weight of the antidote compound per weight of the herbicide compound.

Formulations generally contain several additives in addition to the formulant and carrier or agent. Among these are inert ingredients, diluent carriers, organic solvents, water, oil and water, water in oil emulsions, carriers of dust and granules, and surface active wetting, dispersing and emulsifying agents. Fertilizers useful in combination with the active ingredients of this invention include, for example: potash, urea, superphosphate, and ammonium sulfate.

The composition of the invention may comprise one or more compounds which possess biological activity.

Examples of useful complementary herbicides include:
1. Anilides
   Alachlor - 2-chloro-2',6'-diethyl-N-(methoxymethyl) acetanilide
   Metolachlor - 2-chloro-N-(2-ethyl-6-methylphenyl)-N-(2-methoxy-1-methylethyl)acetamide
   Propanil - N-(3,4-dichlorophenyl)propionanilide
   Propachlor - 2-chloro-N-isopropylacetanilide
   Butachlor - 2-chloro-2',6'-diethyl-N-(butoxymethyl) acetanilide
   Acetochlor - 2-chloro-N-(ethoxymethyl)-6'-ethyl-O-acetotoluidide
   Metazachlor-2-chloro-2',6'-dimethyl-N-(1-pyrazol-1-yl methyl) acetanilide
2. Triazines
   Atrazine - 2-chloro-4-(ethylamino)-6-isopropylamino)-s-triazine
   Cyanazine - 2-chloro-4-(1-cyano-1-methylethylamino)-6-ethylamino-s-triazine
   Metribuzin - 4-amino-6 -tert-butyl-3-(methylthio)-1,2,4-triazin-5(4H)-one
   Simazine - 2-chloro-4,6-bis (ethylamino)-1,3,5-triazine
3. Thiocarbamates
   Molinate - S-ethyl hexahydro-1H-azepine-1-carbothioate
   Butylate - S-ethyl diisobutylthiocarbamate
   EPTC - ethyl dipropulthiolcarbamate
   Triallate - 2,3,3-trichloroallyl-diisopropylthiolcarbamate
   Diallate - cis-1-trans-2,3-dichloroallyl-diisopropylthiolcarbamate
   Vernolate - S-propyl dipropylthiolcarbamate
4. Ureas
   Monuron - 3-(p-chlorophenyl)-1,1-dimethylurea
   Linuron - 3-(3,4-dichlorophenyl)-1-methoxy-1-methylurea 1-(1-cyclohexen-1-yl)-3-(2-fluoro phenyl)-1-methyl urea 3-[4-(4-halophenoxy)phenyl]-1,1-dialkylureas
5. Toluidines
   Trifluralin - α,α,α-trifluoro-2,6-dinitro-N,N-dipropyl-p-toluidine
   Pendimethalin - N-(1-ethylpropyl)-3,4-dimethyl-2,6-dinitrobenzeneamine
6. Hormones
   2,4-D - (2,4-dichlorophenoxy) acetic acid
   MCPA - (2-methyl-4-chlorophenoxy) acetic acid
   Dichlorprop - 2,4,5-trichlorophenoxy acetic acid
   MCPB - 4-(4-chloro-2-methyl phenoxy butynic acid
   2,4,5-T - 2,4,5-trichlorophenoxy acetic acid
   Mecoprop - 2-(4-chloro-2-methyl phenoxy) propionic acid and their derivatives
7. Diazines
   Bentazon - 3-isopropyl-1H-2,3,1-benzothiadiazin-4(3H)-one 2,2-dioxide
   Oxadiazon - 2-tert-butyl-4-(2,4-dichloro-5-isopropoxyphenyl)-Δ²-1,3,4-oxadiazolin-5-one
8. Diphenyl ethers
   Acifluorfen - sodium 5-[2-chloro-4-(trifluoromethyl)phenoxy]-2-nitrobenzoate
   Fluazifop-butyl -(±)-butyl 2-[4[(5-(trifluoromethyl)-2-pyridinyl)oxy]phenoxy]propanoate
   Chlomethoxynil - 2,4-dichlorophenyl 3-methoxy-4-nitrophenyl ether
   Fomesafen - 5-[2-chloro-4-(trifluoromethyl)phenoxy]-N-(methylsulfonyl)-2-nitrobenzamide
   Sethoxydim - 2[1-(ethoxyimino)butyl]-5-[2-(ethylthio)propyl]-3-hydroxy-2-cyclohexen-1 -one
9. Imidazolinones
   Imazaquin - 2-[4,5-dihydro-4-methyl-4-(1-methylethyl)-5-oxo-1H-imidazol-2-yl]-3-quinolin carboxylic acid
   Imazethapyr (±)-2-[4,5-dihydro-4-methyl-4-(1-methylethyl)-5-oxo-1H-imidazol-2-yl]-5-et hyl-3-pyridinecarboxylic acid
10. Sulfonyl ureas
   Bensulfuron methyl - methyl 2-[[[[[(4,6-dimethoxypyrimidin-2-yl)amino]carbonyl]amino]sulfonyl]methyl]benzoate
   Chlorimuron ethyl - ethyl 2-(((((4-chloro-6-methoxypyrimidin-2-yl)amino)carbonyl)amino)sulfonyl) benzoate
   Chlorosulfuron - 2-chloro-N-(4-methoxy-6-methyl-1,3,5-triazine-2-yl)-amino carbonyl) benzene sulphoamide
   Nicosulfuron - 3-pyridimecarboxamide, 2-[([4,6-dimethoxypyrimidin-2-yl]amino-carbonyl)aminosulfonyl]-N,N-dimethyl
   Primisulfuron - 3-[4,6-Bis-(difluoromethoxy)-pyrimidin-2-yl]-1-(2-methoxycarbonylphenylsulfonyl)urea
   Flumetsulam (proposed) - N-[2,6-difluorophenyl]-5-methyl(1,2,4) triazolo-[1,5a]-pyrimidine-2-sulfonamide
11. Dinitrophenols
   DNOC - 2 methyl-4,6-dinitrophenol
   Dinoterb - 2-t-hidyl-4,6-dinitrophenol
12. Miscellaneous Compounds
   Dimethazone - 2-(2-chlorophenyl)methyl-4,4-dimethyl-3-isoxazolidinone
   Norflurazon - 4-chloro-5-(methylamino)-2-α,α,α-trifluoro-m-tolyl)-3-(2H)-pyridazinone
   Dalapon - 2,2-dichloropropionic acid
   Glyphosate - isopropyl amine salt of N-(phosphonomethyl) glycine
   Fenoxaprop-ethyl - (+)-ethyl-2,4-((6-chloro-2-benzoxazoly loxy)phenoxy)propanoate
   Organoarsenical herbicides such as MSMA - monosodium methanearsonate
   Paraquat - 1,1'-dimethyl-4,4'-dipyridylium ion
   Pyridate O - (6-chloro-3-phenyl-4-pyridazinyl)S-octyl carbonothioate
13. Benzoic acids
   2,3,6-TBA - 2,3,6-trichlorobenzoic acid
   Dicamba - 3,6-dichloro-2-methoxy-benzoic acid
   Chloramben - 3-amino-2,5-dichloro benzoic acid

Alternatively, the compounds and compositions of this invention can be applied to a crop by addition to irrigation water supplied to the field to be treated. This method of application permits the penetration of the compositions into the soil as the water is absorbed therein.

As another alternative, the formulation can be applied to the soil in the form of a solution in a suitable solvent. Solvents frequently used in these formulations include kerosene, fuel oil, xylene, petroleum fractions with boiling ranges above xylene and aromatic petroleum fractions rich in methylated naphthalenes. Liquid solutions, like dusts, may be applied by spraying from boom and hand sprayers or airplanes.

Herbicide formulations of the types described above are exemplified in several illustrative examples below.

### Example I

Dusts: The following substances are used to formulate a 5% dust:
   5 parts of active substance
   95 parts of talc

### Example II

Granulate: The following substances are used to formulate a 5% granulate:
   5 parts of active substance
   0.25 part of epichlorohydrin
   0.25 part of cetyl polyglycol ether
   3.25 parts of polyethylene glycol
   91 parts of kaolin (particle size 0.3-0.8 mm).
The active substance is mixed with epichlorohydrin and the mixture is dissolved in 6 parts of acetone. Then polyethylene glycol and cetyl polyglycol ether are added. The resultant solution is sprayed on kaolin and the acetone is evaporated *in vacuo*.

### Example III

Wettable powders: The following constituents are used to formulate (a) a 70%, (b) a 25%, and (c) a 25% wettable powder:
   (a)
      70 parts of active substance
      5 parts of sodium dibutylnaphthylsulfonate
      3 parts of naphthalenesulfonic acid/phenolsulfonic acid/formaldehyde condensate (3:2:1)
      10 parts of kaolin
      12 parts of Champagne chalk
   (b)
      25 parts of active substance
      4.5 parts of calcium ligninsulfate
      1.9 parts of Champagne chalk/hydroxyethyl cellulose mixture (1:1)
      1.5 parts of sodium dibutylnaphthalenesulfonate
      19.5 parts of silicic acid
      19.5 parts of Champagne chalk
   (c)
      25 parts of active substance
      2.5 parts of isoctylphenoxy-polyethylene-ethanol
      1.7 parts of a Champagne chalk/hydroxyethyl cellulose mixture (1:1)
      8.3 parts of sodium aluminum silicate
      16.5 parts of kieselguhr
      46 parts of kaolin
The active substances are intimately mixed in suitable mixers with the additives and ground in appropriate mills and rollers. Wettable powders of excellent wettability and suspension power are obtained. These wettable powders can be diluted with water to give suspensions of the desired concentration and can be used in particular for treating parts of plants.

### Example IV

Emulsifiable concentrate: The following substances are used to formulate a 25% emulsifiable concentrate:
   25 parts of active substance
   2.5 parts of epoxidized vegetable oil
   10 parts of an alkylarylsulfonate/fatty alcohol polyglycol ether mixture
   5 parts of dimethylformamide
   57.5 parts of xylene.
By diluting such a concentrate with water, it is possible to prepare emulsions of the desired concentrations, which are especially suitable for leaf application.

## Claims (Claims for the following Contracting State(s): AT, BE, CH, LI, DE, DK, FR, GB, GR, IT, LU, MC, NL, SE)

1. A herbicidal composition comprising
(a) an herbicidally effective amount of a substituted cyclohexandione of the formula 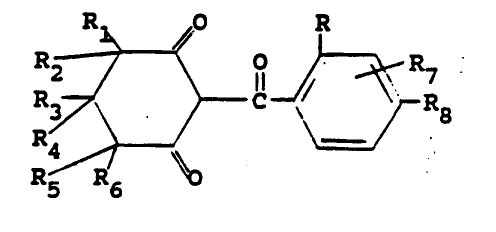 in which
R is halogen; C₁-C₂ alkyl, preferably methyl; C₁-C₂ alkoxy, preferably methoxy; nitro; cyano; C₁-C₂ haloalkyl, preferably trifluoromethyl; or R^{a}SOₙ- wherein n is 0 or 2, preferably 2 and R^{a} is C₁-C₂ alkyl, preferably methyl; Preferably, R is chlorine, bromine, C₁-C₂ alkyl, C₁-C₂ alkoxy, cyano, nitro, C₁-C₂ alkylthio or C₁-C₂ alkylsulfonyl; more preferably chlorine, nitro, methyl, trifluoromethyl or methylsulfonyl;
R₁, R₂, R₃, R₄, R₅ and R₆ are independently hydrogen; C₁-C₄ alkyl, preferably C₁-C₂ alkyl, more preferably methyl or hydrogen;
R₇ and R₈ are independently (1) hydrogen; (2) halogen, preferably chlorine, fluorine or bromine; (3) C₁-C₄ alkyl, preferably methyl; (4) C₁-C₄ alkoxy, preferably methoxy or ethoxy; (5) trifluoromethoxy; (6) cyano; (7) nitro; (8) C₁-C₄ haloalkyl, more preferably trifluoromethyl; (9) R^{b}SOₙ- wherein n is the integer 0, 1 or 2, preferably 0 or 2; and R^{b} is (a) C₁-C₄ alkyl, preferably methyl; or (b) C₁-C₄ alkyl substituted with halogen, preferably chloromethyl, or trifluoromethyl; (10) -NR^{c}R^{d} wherein R^{c} and R^{d} are independently hydrogen or C₁-C₄ alkyl; (11) R^{e}C(O)- wherein R^{e} is C₁-C₄ alkyl or C₁-C₄ alkoxy; (12) -SO₂NR^{c}R^{d} wherein R^{c} and R^{d} are as defined; (13) -N(R^{c})C(O)R^{d} wherein R^{c} and R^{d} are as defined; and (14) -CH₂CH₂OCH₃ or -CH₂CH₂OC₂H₅;
(b) at least one nitrogen containing fertilizer selected from nitrate or ammonium types that is present in an amount that increases the herbicidal activity of said substituted cyclohexanedione; and
(c) one or more adjuvants.

2. A composition according to claim 1 wherein the nitrogen containing fertilizer comprises urea ammonium nitrate.

3. A composition according to claim 1 or claim 2 wherein a said adjuvant is crop oil concentrate.

4. A composition according to anyone of claims 1 to 3 further comprising a substantially non-phytotoxic, antidotally effective amount of a cyclohexanedione herbicide antidote.

5. A herbicidal composition comprising
(a) an herbicidally effective amount of a substituted cyclohexandione of the formula: 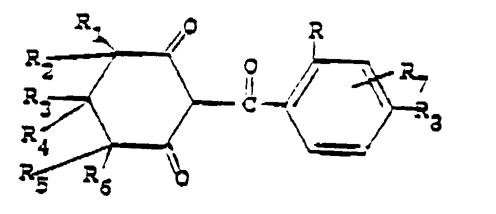 in which
R is halogen;
R₁, R₂, R₃, R₅, and R₆ are each hydrogen or C₁-C₂ alkyl;
R₄ is hydrogen or C₁-C₄ alkyl
R₇ is hydrogen, C₁-C₃ alkoxy, -CH₂CH₂OCH₃-, -CH₂CH₂OC₂H₅, C₁-C₄ thioalkyl; and
R₈ is halogen, trifluoromethyl or R^{b}SOₙ wherein R^{b} is C₁-C₄ alkyl and
n is 0 or 2;
(b) Urea ammonium nitrate wherein the % N is about between 28-33%; and
(c) one or more surfactants.

6. A composition according to Claim 4 further comprising a substantially non-phytotoxic antidotally effective amount of a cyclohexanedione herbicide antidote.

7. A composition according to Claim 6 in which the antidote is an amide of a haloalkanoic acid, an aromatic oxime derivative, a triazole carboxylic acid or derivative thereof, or 1,8-naphthalic anhydride.

8. A composition according to Claim 7 wherein said amide of a haloalkanoic acid is an amide wherein the nitrogen atom thereof is part of an oxazolidone ring.

9. A composition according to Claim 7 wherein said amide of haloalkanoic acid is an amide of dichloroacetic acid.

10. A composition according to Claim 5 wherein R is Cl.

11. A composition according to Claim 10 wherein R₄ is hydrogen or methyl.

12. A composition according to Claim 11 wherein R₇ is C₁-C₃ alkoxy.

13. A composition according to Claim 12 wherein R₈ is R^{b}SOₙ wherein R^{b} is C₁-C₄ alkyl and n is 2.

14. A composition according to Claim 5 wherein said substituted cyclohexanedione is 2-(2-chloro-3-ethoxy-4-ethylsulfonyl benzoyl)-1,3-cyclohexanedione.

15. A composition according to Claim 5 wherein said substituted cyclohexanedione is 2-(2-chloro-3-ethoxy-4-ethylsulfonyl benzoyl)-5-methyl-1,3-cyclohexanedione.

16. A composition according to claim 5 wherein said surfactant is a nonionic surfactant.

17. A composition according to Claim 5 wherein said surfactant is an oil selected from vegetable or petroleum.

18. A composition according to Claim 5 comprising a second pesticide.

19. An herbicidal composition comprising an herbicidally effective amount of 2-(2-chloro-3-ethoxy-4-ethyl sulfonyl benzoyl)-5-methyl-1,3-cyclohexanedione; urea ammonium nitrate and one or more adjuvants.

20. A composition according to Claim 19 further comprising a substantially non-phytotoxic antidotally effective amount of a cyclohexanedione herbicide antidote.

21. A composition according to Claim 19 further comprising a second pesticide.

22. A method of controlling undesirable vegetation in the presence of a crop comprising the post-emergence application to the locus of said vegetation or said crop a herbicidal composition according to Claim 5.

23. A method according to Claim 22 in which the substituted cyclohexanedione is 2-(2-chloro-3-ethoxy-4-ethylsulfonyl benzoyl)-1, 3 cyclohexanedione.

24. A method according to Claim 22 in which the substituted cyclohexanedione is 2-(2-chloro-3-ethoxy-4-ethylsulfonyl benzoyl)-5-methyl-1,3 cyclohexanedione.

25. A method according to Claim 22 further comprising applying to said locus a substantially non-phytotoxic antidotally effective amount of a cyclohexanedione herbicide antidote.

26. A method according to Claim 22 in which the crop is corn.

## Claims (Claims for the following Contracting State(s): ES)

1. A process for preparing a composition comprising
(a) an herbicidally effective amount of a substituted cyclohexanedione of the formula 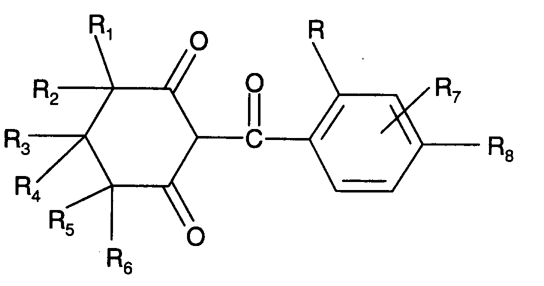 in which
R is halogen; C₁-C₂ alkyl; C₁-C₂ alkoxy; nitro; cyano; C₁-C₂ haloalkyl; or R^{a}SOₙ- wherein n is 0 or 2, and R^{a} is C₁-C₂ alkyl;
R₁, R₂, R₃, R₄, R₅ and R₆ are independently hydrogen or C₁-C₄ alkyl;
R₇ and R₈ are independently selected from (1) hydrogen; (2) halogen; (3) C₁-C₄ alkyl; (4) C₁-C₄ alkoxy; (5) trifluoromethoxy; (6) cyano; (7) nitro; (8) C₁-C₄ haloalkyl; (9) R^{b}SOₙ- wherein n is the integer 0, 1 or 2; and R^{b} is (a) C₁-C₄ alkyl; or (b) C₁-C₄ alkyl substituted with halogen; (10) -NR^{c}R^{d} wherein R^{c} and R^{d} are independently hydrogen or C₁-C₄ alkyl; (11) R^{e}C(O)- wherein R^{e} is C₁-C₄ alkyl or C₁-C₄ alkoxy; (12) -SO₂NR^{c}R^{d} wherein R^{c} and R^{d} are as defined; (13) -N(R^{c})C(O)R^{d} wherein R^{c} and R^{d} are as defined; and (14) -CH₂CH₂OCH₃ or -CH₂CH₂OC₂H₅;
(b) at least one nitrogen containing fertilizer selected from nitrate or ammonium types that is present in an amount that increases the herbicidal activity of said substituted cyclohexanedione; and
(c) one or more adjuvants;
which process comprises mixing the ingredients together.

2. A process according to claim 1 wherein the nitrogen containing fertilizer comprises urea ammonium nitrate.

3. A process according to claim 1 or claim 2 wherein said adjuvant is crop oil concentrate.

4. A process according to anyone of claims 1 to 3 further comprising mixing a substantially non-phytotoxic, antidotally effective amount of a cyclohexanedione herbicide antidote with ingredients (a), (b) and (c).

5. A process for preparing a composition comprising
(a) an herbicidally effective amount of a substituted cyclohexanedione of the formula: 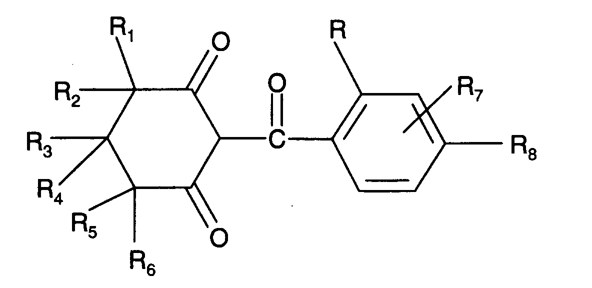 in which
R is halogen;
R₁, R₂, R₃, R₅, and R₆ are each hydrogen or C₁-C₂ alkyl;
R₄ is hydrogen or C₁-C₄ alkyl;
R₇ is hydrogen, C₁-C₃ alkoxy, -CH₂CH₂OCH₃, -CH₂CH₂OC₂H₅, or C₁-C₄ thioalkyl; and
R₈ is halogen, trifluoromethyl or R^{b}SOₙ wherein R^{b} is C₁-C₄ alkyl and n is 0 or 2;
(b) urea ammonium nitrate wherein the % N is about between 28-33%; and
(c) one or more surfactants;
which process comprises mixing the ingredients together.

6. A process according to claim 4 further comprising mixing a substantially non-phytotoxic antidotally effective amount of a cyclohexanedione herbicide antidote with ingredients (a), (b) and (c).

7. A process according to claim 6 in which the antidote is an amide of a haloalkanoic acid, an aromatic oxime derivative, a triazole carboxylic acid or derivative thereof, or 1,8-naphthalic anhydride.

8. A process according to claim 7 wherein said amide of a haloalkanoic acid is an amide wherein the nitrogen atom thereof is part of an oxazolidone.

9. A process according to claim 7 wherein said amide of haloalkanoic acid is an amide of dichloroacetic acid.

10. A process according to claim 5 wherein R is Cl.

11. A process according to claim 10 wherein R₄ is hydrogen or methyl.

12. A process according to claim 11 wherein R₇ is C₁-C₃ alkoxy.

13. A process according to claim 12 wherein R₈ is R^{b}SOₙ wherein R^{b} is C₁-C₄ alkyl and n is 2.

14. A process according to claim 5 wherein said substituted cyclohexanedione is 2-(2-chloro-3-ethoxy-4-ethylsulfonyl benzoyl)-1,3-cyclohexanedione.

15. A process according to claim 5 wherein said substituted cyclohexanedione is 2-(2-chloro-3-ethoxy-4-ethylsulfonyl benzoyl)-5-methyl-1,3-cyclohexanedione.

16. A process according to claim 5 wherein said surfactant is a nonionic surfactant.

17. A process according to claim 5 wherein said surfactant is an oil selected from vegetable or petroleum.

18. A process according to claim 5 comprising mixing a second pesticide with ingredients (a), (b) and (c).

19. A process for preparing a composition comprising an herbicidally effective amount of 2-(2-chloro-3-ethoxy-4-ethyl sulfonyl benzoyl)-5-methyl-1,3-cyclohexanedione; urea ammonium nitrate and one or more adjuvants, which process comprises mixing the ingredients together.

20. A process according to claim 19 further comprising mixing a substantially non-phytotoxic antidotally effective amount of a cyclohexanedione herbicide antidote with the other ingredients.

21. A process according to claim 19 further comprising mixing a second pesticide with the other ingredients.

## Patentansprüche (Patentansprüche für folgende(n) Vertragsstaat(en): AT, BE, CH, LI, DE, DK, FR, GB, GR, IT, LU, MC, NL, SE)

1. Herbicide Zusammensetzung, die enthält:
a) eine herbicid wirksame Menge eines substituierten Cyclohexandions der Formel: 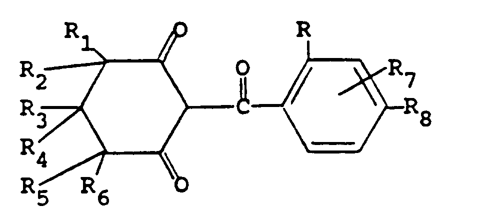 in der bedeuten:
R Halogen, C₁-C₂-Alkyl, vorzugsweise Methyl, C₁-C₂-Alkoxy, vorzugsweise Methoxy, Nitro, Cyano, C₁-C₂-Halogenalkyl, vorzugsweise Trifluormethyl, oder R^{a}SOₙ-, wobei n 0 oder 2 ist, vorzugsweise 2, und R^{a} C₁-C₂-Alkyl ist, vorzugsweise Methyl, wobei R vorzugsweise Chlor, Brom, C₁-C₂-Alkyl, C₁-C₂-Alkoxy, Cyano, Nitro, C₁-C₂-Alkylthio oder C₁-C₂-Alkylsulfonyl, noch bevorzugter Chlor, Nitro, Methyl, Trifluormethyl oder Methylsulfonyl ist;
R₁, R₂, R₃, R₄, R₅ und R₆ unabhängig voneinander Wasserstoff, C₁-C₄-Alkyl, vorzugsweise C₁-C₂-Alkyl, noch bevorzugter Methyl oder Wasserstoff,
R₇ und R₈ unabhängig voneinander (1) Wasserstoff, (2) Halogen, vorzugsweise Chlor, Fluor oder Brom, (3) C₁-C₄-Alkyl, vorzugsweise Methyl, (4) C₁-C₄-Alkoxy, vorzugsweise Methoxy oder Ethoxy, (5) Trifluormethoxy, (6) Cyano, (7) Nitro, (8) C₁-C₄- Halogenalkyl, noch bevorzugter Trifluormethyl, (9) R^{b}SOₙ-, wobei n die ganze Zahl 0, 1 oder 2 ist, vorzugsweise 0 oder 2, und R^{b} (a) C₁-C₄-Alkyl, vorzugsweise Methyl, oder (b) C₁-C₄-Alkyl ist, das mit Halogen substituiert ist, vorzugsweise Chlormethyl oder Trifluormethyl, (10) -NR^{c}R^{d}, wobei R^{c} und R^{d} unabhängig voneinander Wasserstoff oder C₁-C₄-Alkyl sind, (11) R^{e}C(O)-, wobei R^{e} C₁-C₄-Alkyl oder C₁-C₄-Alkoxy ist, (12) -SO₂NR^{c}R^{d}, wobei R^{c} und R^{d} das bereits definierte bedeuten, (13) -N(R^{c})C(O)R^{d}, wobei R^{c} und R^{d} das bereits definierte, bedeuten, und (14) -CH₂CH₂OCH₃ oder -CH₂CH₂OC₂H₅,
b) mindestens ein stickstoffhaltiges Düngemittel, das unter Nitrat- oder Ammonium-Typen ausgewählt und in einer solchen Menge vorhanden ist, daß dadurch die herbicide Wirkung des substituierten Cyclohexandions erhöht wird, und
c) ein oder mehrere Adjuvantien.

2. Zusammensetzung nach Anspruch 1, wobei das stickstoffhaltige Düngemittel Harnstoffammoniumnitrat enthält.

3. Zusammensetzung nach Anspruch 1 oder 2, wobei das Adjuvans Kulturpflanzenöl-Konzentrat ist.

4. Zusammensetzung nach einem der Ansprüche 1 bis 3, die außerdem eine im wesentlichen nicht phytotoxische, als Antidot wirksame Menge eines Cyclohexandion-Herbicid-Antidots enthält.

5. Herbicide Zusammensetzung, die enthält:
(a) eine herbicid wirksame Menge eines substituierten Cyclohexandions der Formel: 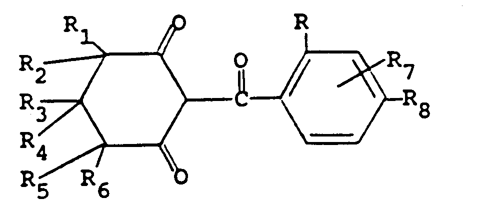 in der bedeuten:
R Halogen,
R₁, R₂, R₃, R₅ und R₆ jeweils Wasserstoff oder C₁-C₂-Alkyl,
R₄ Wasserstoff oder C₁-C₄-Alkyl,
R₇ Wasserstoff, C₁-C₃-Alkoxy, -CH₂CH₂OCH₃-, -CH₂CH₂OC₂H₅, C₁-C₄-Thialkyl, und
R₈ Wasserstoff, Trifluormethyl oder R^{b}SOₙ, wobei R^{b} C₁-C₄-Alkyl und n 0 oder 2 ist;
(b) Harnstoffammoniumnitrat, wobei der N-Prozentsatz etwa zwischen 28-33 % beträgt, und
(c) ein oder mehrere grenzflächenaktive Mittel.

6. Zusammensetzung nach Anspruch 4, die außerdem eine im wesentlichen nicht phytotoxische, als Antidot wirksame Menge eines Cyclohexandion-Herbicid-Antidots enthält.

7. Zusammensetzung nach Anspruch 6, wobei das Antidot ein Amid einer Halogenalkansäure, ein Derivat eines aromatischen Oxims, eine Triazolcarbonsäure oder ein Derivat davon oder 1,8-Naphthalinsäureanhydrid ist.

8. Zusammensetzung nach Anspruch 7, wobei das Amid einer Halogenalkansäure ein Amid ist, dessen Stickstoffatom ein Oxazolidon ist.

9. Zusammensetzung nach Anspruch 7, wobei das Amid der Halogenalkansäure Dichloressigsäure ist.

10. Zusammensetzung nach Anspruch 5, wobei R Cl ist.

11. Zusammensetzung nach Anspruch 10, wobei R₄ Wasserstoff oder Methyl ist.

12. Zusammensetzung nach Anspruch 11, wobei R₇ C₁-C₃-Alkoxy ist.

13. Zusammensetzung nach Anspruch 12, wobei R₈ R^{b}SOₙ bedeutet, wobei R^{b} C₁-C₄-Alkyl und n 2 ist.

14. Zusammensetzung nach Anspruch 5, wobei das substituierte Cyclohexandion 2-(2-Chlor-3-ethoxy-4-ethylsulfonylbenzoyl)-1,3-cyclohexandion ist.

15. Zusammensetzung nach Anspruch 5, wobei das substituierte Cyclohexandion 2-(2-Chlor-3-ethoxy-4-ethylsulfonylbenzoyl)-5-methyl-1,3-cyclohexandion ist.

16. Zusammensetzung nach Anspruch 5, wobei das grenzflächenaktive Mittel ein nicht-ionisches grenzflächenaktives Mittel ist.

17. Zusammensetzung nach Anspruch 5, wobei das grenzflächenaktive Mittel ein Öl ist, das unter Pflanzenöl oder Mineralöl ausgewählt ist.

18. Zusammensetzung nach Anspruch 5, die ein zweites Pestizid enthält.

19. Herbicide Zusammensetzung, die eine herbicid wirksame Menge 2-(2-Chlor-3-ethoxy-4-ethylsulfonyl)benzoyl)-5-methyl-1,3-cyclohexandion, Harnstoffammoniumnitrat und ein oder mehrere Adjuvantien enthält.

20. Zusammensetzung nach Anspruch 19, die außerdem eine im wesentlichen nicht phytotoxische, als Antidot wirksame Menge eines Cyclohexandion-Herbicid-Antidots enthält.

21. Zusammensetzung nach Anspruch 19, die außerdem ein zweites Pestizid enthält.

22. Verfahren zur Bekämpfung unerwünschter Vegetation in Gegenwart von Kulturpflanzen, bei dem nach dem Auflaufen auf den Standort der Vegetation oder der Kulturpflanzen eine herbicide Zusammensetzung nach Anspruch 5 ausgetragen wird.

23. Verfahren nach Anspruch 22, wobei das substituierte Cyclohexandion 2-(2-Chlor-3-ethoxy-4-ethylsulfonylbenzoyl)-1,3-cyclohexandion ist.

24. Verfahren nach Anspruch 22, wobei das substituierte Cyclohexandion 2-(2-Chlor-3-ethoxy-4-ethylsulfonylbenzoyl)-5-methyl-1,3-cyclohexandion ist.

25. Verfahren nach Anspruch 22, bei dem außerdem auf den Standort eine im wesentlichen nicht phytotoxische, als Antidot wirksame Menge eines Cyclohexandion-Herbicid-Antidots ausgebracht wird.

26. Verfahren nach Anspruch 22, wobei die Kulturpflanze Mais ist.

## Patentansprüche (Patentansprüche für folgende(n) Vertragsstaat(en): ES)

1. Verfahren zur Herstellung einer Zusammensetzung, die enthält:
a) eine herbicid wirksame Menge eines substituierten Cyclohexandions der Formel: 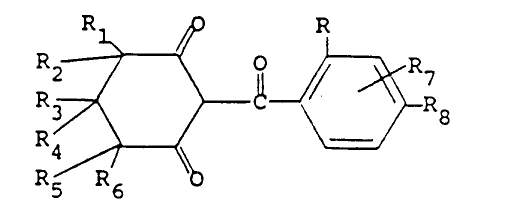 in der bedeuten:
R Halogen, C₁-C₂-Alkyl, C₁-C₂-Alkoxy, Nitro, Cyano, C₁-C₂-Halogenalkyl oder R^{a}SOₙ-, wobei n 0 oder 2 ist und R^{a} C₁-C₂-Alkyl ist,
R₁, R₂, R₃, R₄, R₅ und R₆ unabhängig voneinander Wasserstoff oder C₁-C₄-Alkyl,
R₇ und R₈ sind unabhängig voneinander ausgewählt unter (1) Wasserstoff, (2) Halogen, (3) C₁-C₄-Alkyl, (4) C₁-C₄-Alkoxy, (5) Trifluormethoxy, (6) Cyano, (7) Nitro, (8) C₁-C₄- Halogenalkyl, (9) R^{b}SOₙ-, wobei n die ganze Zahl 0, 1 oder 2 ist, und R^{b} (a) C₁-C₄-Alkyl oder (b) C₁-C₄-Alkyl ist, das mit Halogen substituiert ist, (10) -NR^{c}R^{d}, wobei R^{c} und R^{d} unabhängig voneinander Wasserstoff oder C₁-C₄-Alkyl sind, (11) R^{e}C(O)-, wobei R^{e} C₁-C₄-Alkyl oder C₁-C₄-Alkoxy ist, (12) -SO₂NR^{c}R^{d}, wobei R^{c} und R^{d} das bereits definierte bedeuten, (13) -N(R^{c})C(O)R^{d}, wobei R^{c} und R^{d} das bereits definierte, bedeuten, und (14) -CH₂CH₂OCH₃ oder -CH₂CH₂OC₂H₅,
b) mindestens ein stickstoffhaltiges Düngemittel, das unter Nitrat- oder Ammonium-Typen ausgewählt, und in einer solchen Menge vorhanden ist, daß dadurch die herbicide Wirkung des substituierten Cyclohexandions erhöht wird, und
c) ein oder mehrere Adjuvantien, bei welchem Verfahren die Inhaltsstoffe vermischt werden.

2. Verfahren nach Anspruch 1, wobei das stickstoffhaltige Düngemittel Harnstoffammoniumnitrat enthält.

3. Verfahren nach Anspruch 1 oder 2, wobei das Adjuvans Kulturpflanzenöl-Konzentrat ist.

4. Verfahren nach einem der Ansprüche 1 bis 3, bei dem außerdem eine im wesentlichen nicht phytotoxische, als Antidot wirksame Menge eines Cyclohexandion-Herbicid-Antidots mit den Inhaltsstoffen (a), (b) und (c) vermischt wird.

5. Verfahren zur Herstellung einer Zusammensetzung, die enthält:
(a) eine herbicid wirksame Menge eines substituierten Cyclohexandions der Formel: 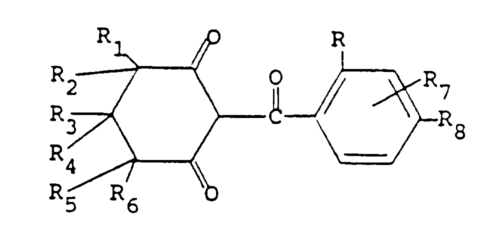 in der bedeuten:
R Halogen,
R₁, R₂, R₃, R₅ und R₆ jeweils Wasserstoff oder C₁-C₂-Alkyl,
R₄ Wasserstoff oder C₁-C₄-Alkyl,
R₇ Wasserstoff, C₁-C₃-Alkoxy, -CH₂CH₂OCH₃-, -CH₂CH₂OC₂H₅, C₁-C₄-Thialkyl, und
R₈ Wasserstoff, Trifluormethyl oder R^{b}SOₙ, wobei R^{b} C₁-C₄-Alkyl und n 0 oder 2 ist;
(b) Harnstoffammoniumnitrat, wobei der N-Prozentsatz etwa zwischen 28-33 % beträgt, und
(c) ein oder mehrere grenzflächenaktive Mittel, bei welchem Verfahren die Inhaltsstoffe vermischt werden.

6. Verfahren nach Anspruch 4, bei dem außerdem eine im wesentlichen nicht phytotoxische, als Antidot wirksame Menge eines Cyclohexandion-Herbicid-Antidots mit den Inhaltsstoffen (a), (b) und (c) vermischt wird.

7. Verfahren nach Anspruch 6, wobei das Antidot ein Amid einer Halogenalkansäure, ein Derivat eines aromatischen Oxims, eine Triazolcarbonsäure oder ein Derivat davon oder 1,8-Naphthalinsäureanhydrid ist.

8. Verfahren nach Anspruch 7, wobei das Amid einer Halogenalkansäure ein Amid ist, dessen Stickstoffatom Teil eines Oxazolidons ist.

9. Verfahren nach Anspruch 7, wobei das Amid der Halogenalkansäure ein Amid der Dichloressigsäure ist.

10. Verfahren nach Anspruch 5, wobei R Cl ist.

11. Verfahren nach Anspruch 10, wobei R₄ Wasserstoff oder Methyl ist.

12. Verfahren nach Anspruch 11, wobei R₇ C₁-C₃-Alkoxy ist.

13. Verfahren nach Anspruch 12, wobei R₈ R^{b}SOₙ bedeutet, wobei R^{b} C₁-C₄-Alkyl und n 2 ist.

14. Verfahren nach Anspruch 5, wobei das substituierte Cyclohexandion 2-(2-Chlor-3-ethoxy-4-ethylsulfonylbenzoyl)-1,3-cyclohexandion ist.

15. Verfahren nach Anspruch 5, wobei das substituierte Cyclohexandion 2-(2-Chlor-3-ethoxy-4-ethylsulfonylbenzoyl)-5-methyl-1,3-cyclohexandion ist.

16. Verfahren nach Anspruch 5, wobei das grenzflächenaktive Mittel ein nicht-ionisches grenzflächenaktives Mittel ist.

17. Verfahren nach Anspruch 5, wobei das grenzflächenaktive Mittel ein Öl ist, das unter Pflanzenöl oder Mineralöl ausgewählt ist.

18. Verfahren nach Anspruch 5, bei dem ein zweites Pestizid mit den Inhaltsstoffen (a), (b) und (c) vermischt wird.

19. Verfahren zur Herstellung einer Zusammensetzung, die eine herbicid wirksame Menge 2-(2-Chlor-3-ethoxy-4-ethylsulfonylbenzoyl)-5-methyl-1,3-cyclohexandion, Harnstoffammoniumnitrat und ein oder mehrere Adjuvantien enthält, bei welchem Verfahren die Inhaltsstoffe vermischt werden.

20. Verfahren nach Anspruch 19, bei dem außerdem eine im wesentlichen nicht phytotoxische, als Antidot wirksame Menge eines Cyclohexandion-Herbicid-Antidots mit den anderen Inhaltsstoffen vermischt wird.

21. Verfahren nach Anspruch 19, bei dem außerdem ein zweites Pestizid mit den anderen Inhaltsstoffen vermischt wird.

## Revendications (Revendications pour l'(les) Etat(s) contractant(s) suivant(s): AT, BE, CH, LI, DE, DK, FR, GB, GR, IT, LU, MC, NL, SE)

1. Composition herbicide comprenant
(a) une quantité, efficace du point de vue herbicide, d'une cyclohexanedione substituée de formule 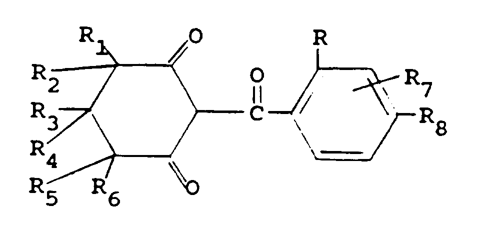 dans laquelle
R représente un halogène ; un groupe alkyle en C₁ ou C₂, de préférence méthyle ; alkoxy en C₁ ou C₂, de préférence méthoxy ; nitro ; cyano ; halogénalkyle en C₁ ou C₂, de préférence trifluorométhyle ; ou R^{a}SOₙ- dans lequel n est égal à 0 ou 2, de préférence 2, et R^{a} représente un groupe alkyle en C₁ ou C₂, de préférence méthyle. R représente avantageusement le chlore, le brome, un groupe alkyle en C₁ ou C₂, alkoxy en C₁ ou C₂, cyano, nitro, alkylthio en C₁ ou C₂ ou alkylsulfonyle en C₁ ou C₂ ; de préférence le chlore, un groupe nitro, méthyle, trifluorométhyle ou méthylsulfonyle ;
R₁, R₂, R₃, R₄, R₅ et R₆ représentent, indépendamment, l'hydrogène ; un groupe alkyle en C₁ à C₄, avantageusement alkyle en C₁ ou C₂, de préférence méthyle ou l'hydrogène ;
R₇ et R₈ représentent, indépendamment, (1) l'hydrogène ; (2) un halogène, de préférence le chlore, le fluor ou le brome ; (3) un groupe alkyle en C₁ à C₄, de préférence méthyle ; (4) un groupe alkoxy en C₁ à C₄, de préférence méthoxy ou éthoxy ; (5) un groupe trifluorométhoxy ; (6) un groupe cyano ; (7) un groupe nitro ; (8) un groupe halogénalkyle en C₁ à C₄, de préférence trifluorométhyle ; (9) un groupe R^{b}SOₙ-, dans lequel n est le nombre entier 0, 1 ou 2, de préférence 0 ou 2, et R^{b} représente (a) un groupe alkyle en C₁ à C₄, de préférence méthyle ; ou (b) un groupe alkyle en C₁ à C₄ substitué avec un halogène, de préférence un groupe chlorométhyle ou trifluorométhyle ; (10) un groupe -NR^{c}R^{d} dans lequel R^{c} et R^{d} représentent, indépendamment, l'hydrogène ou un groupe alkyle en C₁ à C₄ ; (11) un groupe R^{e}C(O)- dans lequel R^{e} représente un groupe alkyle en C₁ à C₄ ou alkoxy en C₁ à C₄ ; (12) un groupe -SO₂NR^{c}R^{d} dans lequel R^{c} et R^{d} répondent aux définitions indiquées ; (13) un groupe -N(R^{c})C(O)R^{d} dans lequel R^{c} et R^{d} répondent aux définitions indiquées ; et (14) un groupe -CH₂CH₂OCH₃ ou -CH₂CH₂OC₂H₅ ;
(b) au moins un engrais azoté choisi entre des engrais du type nitrate ou des engrais du type ammonium, qui est présent en une quantité qui accroît l'activité herbicide de ladite cyclohexanedione substituée ; et
(c) un ou plusieurs adjuvants.

2. Composition suivant la revendication 1, dans laquelle l'engrais azoté comprend l'urée-nitrate d'ammonium.

3. Composition suivant la revendication 1 ou la revendication 2, dans laquelle un tel adjuvant est un concentré d'huile d'une plante cultivée.

4. Composition suivant l'une quelconque des revendications 1 à 3, comprenant en outre une quantité pratiquement non phytotoxique, efficace à titre d'antidote, d'un antidote d'herbicide du type cyclohexanedione.

5. Composition herbicide comprenant
(a) une quantité, efficace du point de vue herbicide, d'une cyclohexanedione substituée de formule : 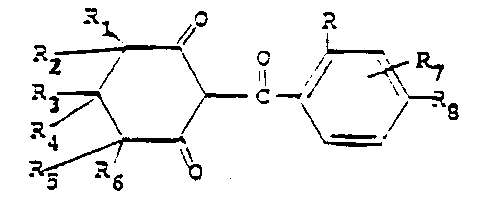 dans laquelle
R représente un halogène ;
R₁, R₂, R₃, R₅ et R₆ représentent chacun l'hydrogène ou un groupe alkyle en C₁ ou C₂ ;
R₄ représente l'hydrogène ou un groupe alkyle en C₁ à C₄ ;
R₇ représente l'hydrogène, un groupe alkoxy en C₁ à C₃, -CH₂CH₂OCH₃-, -CH₂CH₂OC₂H₅ ou thioalkyle en C₁ à C₄ ; et
R₈ représente un halogène, un groupe trifluorométhyle ou R^{b}SOₙ dans lequel R^{b} représente un groupe alkyle en C₁ à C₄ et n est égal à 0 ou 2 ;
(b) de l'urée-nitrate d'ammonium, dans lequel le pourcentage de N est compris approximativement dans l'intervalle de 28 à 33 % ; et
(c) un ou plusieurs surfactants.

6. Composition suivant la revendication 4, comprenant en outre une quantité pratiquement non phytotoxique, efficace à titre d'antidote, d'un antidote d'herbicide du type cyclohexanedione.

7. Composition suivant la revendication 6, dans laquelle l'antidote est un amide d'un acide halogénalcanoïque, un dérivé d'oxime aromatique, un acide triazolecarboxylique ou un de ces dérivés, ou l'anhydride-1,8-naphtalique.

8. Composition suivant la revendication 7, dans laquelle l'amide d'un acide halogénalcanoïque est un amide dont l'atome d'azote fait partie d'une oxazolidone.

9. Composition suivant la revendication 7, dans laquelle l'amide d'un acide halogénalcanoïque est l'amide d'acide dichloracétique.

10. Composition suivant la revendication 5, dans laquelle R représente Cl.

11. Composition suivant la revendication 10, dans laquelle R₄ représente l'hydrogène ou un groupe méthyle.

12. Composition suivant la revendication 11, dans laquelle R₇ représente un groupe alkoxy en C₁ à C₃.

13. Composition suivant la revendication 12, dans laquelle R₈ représente un groupe R^{b}SOₙ dans lequel R^{b} représente un groupe alkyle en C₁ à C₄ et n est égal à 2.

14. Composition suivant la revendication 5, dans laquelle la cyclohexanedione substituée est la 2-(2-chloro-3-éthoxy-4-éthylsulfonylbenzoyl)-1,3-cyclohexanedione.

15. Composition suivant la revendication 5, dans laquelle la cyclohexanedione substituée est la 2-(2-chloro-3-éthoxy-4-éthylsulfonylbenzoyl)-5-méthyl-1,3-cyclohexanedione.

16. Composition suivant la revendication 5, dans laquelle le surfactant est un surfactant non ionique.

17. Composition suivant la revendication 5, dans laquelle le surfactant est une huile choisie entre une huile végétale et une huile dérivée du pétrole.

18. Composition suivant la revendication 5, comprenant un second pesticide.

19. Composition herbicide comprenant une quantité, efficace du point de vue herbicide, de 2-(2-chloro-3-éthoxy-4-éthylsulfonylbenzoyl)-5-méthyl-1,3-cyclohexanedione ; de l'urée-nitrate d'ammonium et un ou plusieurs adjuvants.

20. Composition suivant la revendication 19, comprenant en outre une quantité pratiquement non phytotoxique, efficace à titre d'antidote, d'un antidote d'herbicide du type cyclohexanedione.

21. Composition suivant la revendication 19, comprenant en outre un second pesticide.

22. Procédé pour lutter contre de la végétation indésirable en présence d'une culture, comprenant l'application en post-levée au milieu dans lequel se trouve ladite végétation ou ladite culture d'une composition herbicide suivant la revendication 5.

23. Procédé suivant la revendication 22, dans lequel la cyclohexanedione substituée est la 2-(2-chloro-3-éthoxy-4-éthylsulfonylbenzoyl)-1,3-cyclohexanedione.

24. Procédé suivant la revendication 22, dans lequel la cyclohexanedione substituée est la 2-(2-chloro-3-éthoxy-4-éthylsulfonylbenzoyl)-5-méthyl-1,3-cyclohexanedione.

25. Procédé suivant la revendication 22, comprenant en outre l'application au milieu d'une quantité pratiquement non phytotoxique, efficace à titre d'antidote, d'un antidote d'herbicide du type cyclohexanedione.

26. Procédé suivant la revendication 22, dans lequel la culture est une culture de maïs.

## Revendications (Revendications pour l'(les) Etat(s) contractant(s) suivant(s): ES)

1. Procédé pour la préparation d'une composition comprenant
(a) une quantité, efficace du point de vue herbicide, d'une cyclohexanedione substituée de formule 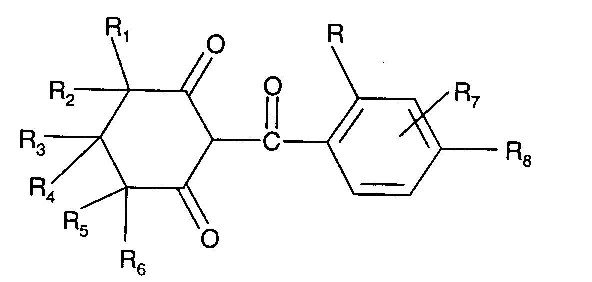 dans laquelle
R représente un halogène ; un groupe alkyle en C₁ ou C₂ ; alkoxy en C₁ ou C₂ ; nitro ; cyano ; halogénalkyle en C₁ ou C₂ ; ou R^{a}SOₙ- dans lequel n est égal à 0 ou 2, et R^{a} représente un groupe alkyle en C₁ ou C₂ ;
R₁, R₂, R₃, R₄, R₅ et R₆ représentent, indépendamment l'hydrogène ou un groupe alkyle en C₁ a C₄ ;
R₇ et R₈ sont choisis indépendamment entre (1) l'hydrogène ; (2) un halogène ; (3) un groupe alkyle en C₁ à C₄ ; (4) un groupe alkoxy en C₁ à C₄ ; (5) un groupe trifluorométhoxy ; (6) un groupe cyano ; (7) un groupe nitro ; (8) un groupe halogénalkyle en C₁ à C₄ ; (9) un groupe R^{b}SOₙ-dans lequel n représente le nombre entier 0, 1 ou 2, et R^{b} représente (a) un groupe alkyle en C₁ à C₄ ; (b) un groupe alkyle en C₁ à C₄ substitué avec un halogène ; (10) un groupe -NR^{c}R^{d} dans lequel R^{c} et R^{d} représentent indépendamment, l'hydrogène ou un groupe alkyle en C₁ à C₄ ; (11) un groupe R^{e}C(O)- dans lequel R^{e} représente un groupe alkyle en C₁ à C₄ ou alkoxy en C₁ à C₄ ; (12) un groupe -SO₂NR^{c}R^{d} dans lequel R^{c} et R^{d} répondent aux définitions mentionnées ; (13) un groupe -N(R^{c})C(O)R^{d} dans lequel R^{c} et R^{d} répondent aux définitions mentionnées ; et (14) un groupe -CH₂CH₂OCH₃ ou -CH₂CH₂OC₂H₅ ;
(b) au moins un engrais azoté choisi entre des engrais du type nitrate ou des engrais du type ammonium, qui est présent en une quantité qui accroît l'activité herbicide de ladite cyclohexanedione substituée ; et
(c) un ou plusieurs adjuvants ;
procédé qui comprend le mélange des ingrédients les uns avec les autres.

2. Procédé suivant la revendication 1, dans lequel l'engrais azoté comprend l'urée-nitrate d'ammonium.

3. Procédé suivant la revendication 1 ou la revendication 2, dans lequel l'adjuvant est un concentré d'huile d'une plante cultivée.

4. Procédé suivant l'une quelconque des revendications 1 à 3, comprenant en outre le mélange d'une quantité pratiquement non phytotoxique, efficace à titre d'antidote, d'un antidote d'herbicide du type cyclohexanedione avec les ingrédients (a), (b) et (c).

5. Procédé pour la préparation d'une composition comprenant
(a) une quantité, efficace du point de vue herbicide, d'une cyclohexanedione substituée, de formule : 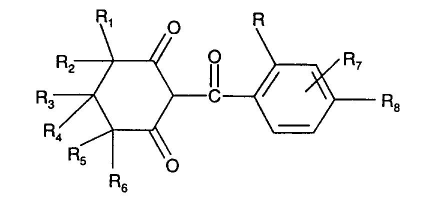 dans laquelle
R représente un halogène ;
R₁, R₂, R₃, R₅ et R₆ représentent chacun l'hydrogène ou un groupe alkyle en C₁ ou C₂ ;
R₄ représente l'hydrogène ou un groupe alkyle en C₁ à C₄ ;
R₇ représente l'hydrogène, un groupe alkoxy en C₁ à C₃, -CH₂CH₂OCH₃-, -CH₂CH₂OC₂H₅ ou thioalkyle en C₁ à C₄ ; et
R₈ représente un halogène, un groupe trifluorométhyle ou R^{b}SOₙ dans lequel R^{b} représente un groupe alkyle en C₁ à C₄ et n est égal à 0 ou 2 ;
(b) de l'urée-nitrate d'ammonium, dans lequel le pourcentage de N est compris dans l'intervalle d'environ 28 à 33 % ; et
(c) un ou plusieurs surfactants ;
procédé qui comprend le mélange des ingrédients les uns avec les autres.

6. Procédé suivant la revendication 4, comprenant en outre le mélange d'une quantité pratiquement non phytotoxique, efficace à titre d'antidote, d'un antidote d'herbicide du type cyclohexanedione avec les ingrédients (a), (b) et (c).

7. Procédé suivant la revendication 6, dans lequel l'antidote est un amide d'un acide halogénalcanoïque, un dérivé d'oxime aromatique, un acide triazole-carboxylique ou un de ses dérivés, ou l'anhydride-1,8-naphtalique.

8. Procédé suivant la revendication 7, dans lequel l'amide d'un acide halogénalcanoïque est un amide dont l'atome d'azote fait partie d'un noyau oxazolidone.

9. Procédé suivant la revendication 7, dans lequel l'amide d'acide halogénalcanoïque est un amide d'acide dichloracétique.

10. Procédé suivant la revendication 5, dans lequel R représente Cl.

11. Procédé suivant la revendication 10, dans lequel R₄ représente l'hydrogène ou un groupe méthyle.

12. Procédé suivant la revendication 11, dans lequel R₇ représente un groupe alkoxy en C₁ à C₃.

13. Procédé suivant la revendication 12, dans lequel R₈ représente un groupe R^{b}SOₙ dans lequel R^{b} représente un groupe alkyle en C₁ à C₄ et n est égal à 2.

14. Procédé suivant la revendication 5, dans lequel la cyclohexanedione substituée est la 2-(2-chloro-3-éthoxy-4-éthylsulfonylbenzoyl)-1,3-cyclohexanedione.

15. Procédé suivant la revendication 5, dans lequel la cyclohexanedione substituée est la 2-(2-chloro-3-éthoxy-4-éthylsulfonylbenzoyl)-5-méthyl-1,3-cyclohexanedione.

16. Procédé suivant la revendication 5, dans lequel le surfactant est un surfactant non ionique.

17. Procédé suivant la revendication 5, dans lequel le surfactant est une huile choisie entre une huile végétale et une huile dérivée du pétrole.

18. Procédé suivant la revendication 5, comprenant le mélange d'un second pesticide aux ingrédients (a), (b) et (c).

19. Procédé pour la préparation d'une composition comprenant une quantité efficace du point de vue herbicide, de 2-(2-chloro-3-éthoxy-4-éthylsulfonylbenzoyl)-5-méthyl-1,3-cyclohexanedione ; de l'urée-nitrate d'ammonium et un ou plusieurs adjuvants, procédé qui comprend le mélange des ingrédients les uns avec les autres.

20. Procédé suivant la revendication 19, comprenant en outre le mélange d'une quantité pratiquement non phytotoxique, efficace à titre d'antidote, d'un antidote d'herbicide du type cyclohexanedione avec les autres ingrédients.

21. Procédé suivant la revendication 19, comprenant en outre le mélange d'un second pesticide avec les autres ingrédients.
